(19) Europäisches Patentamt
European Patent Office
Office européen des brevets

(11) **EP 4 325 596 A1**

(12) **EUROPEAN PATENT APPLICATION**
published in accordance with Art. 153(4) EPC

(43) Date of publication:
**21.02.2024 Bulletin 2024/08**

(21) Application number: **22819912.1**

(22) Date of filing: **29.03.2022**

(51) International Patent Classification (IPC):
*H01M 4/133* (2010.01)        *H01M 4/587* (2010.01)
*H01G 11/26* (2013.01)        *H01M 10/0525* (2010.01)
*H01M 10/058* (2010.01)

(52) Cooperative Patent Classification (CPC):
**H01G 11/26; H01M 4/133; H01M 4/587;
H01M 10/0525; H01M 10/058**

(86) International application number:
**PCT/JP2022/015251**

(87) International publication number:
**WO 2022/259724 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2021 JP 2021096962**

(71) Applicant: **GS Yuasa International Ltd.
Kisshoin, Minami-ku,
Kyoto-shi, Kyoto 601-8520 (JP)**

(72) Inventors:
• **YAMATANI, Norio**
  **Kyoto-shi, Kyoto 601-8520 (JP)**
• **TANABE, Morito**
  **Kyoto-shi, Kyoto 601-8520 (JP)**
• **ASADA, Yuki**
  **Kyoto-shi, Kyoto 601-8520 (JP)**

(74) Representative: **Isarpatent
Patent- und Rechtsanwälte
Barth Hassa Peckmann & Partner mbB
Friedrichstraße 31
80801 München (DE)**

(54) **POWER STORAGE ELEMENT**

(57)    An energy storage device according to an aspect of the present invention includes an electrode assembly including a negative electrode and a positive electrode, the negative electrode includes a negative active material layer including a negative active material, the negative active material contains solid graphite, the negative active material layer has a BET specific surface area of 2.1 m$^2$/g or less, and a pressure applied to the electrode assembly is 0.1 MPa or more.

Fig. 1

EP 4 325 596 A1

**Description**

TECHNICAL FIELD

The present invention relates to an energy storage device.

BACKGROUND ART

Nonaqueous electrolyte solution secondary batteries typified by lithium ion secondary batteries are often used for electronic devices such as personal computers and communication terminals, motor vehicles, and the like since these secondary batteries have a high energy density. Also, capacitors such as lithium ion capacitors and electric double-layer capacitors, energy storage devices with electrolyte solutions other than nonaqueous electrolyte solutions used, and the like are also widely used as energy storage devices other than nonaqueous electrolyte solution secondary batteries.

For purposes such as improving the energy density of such an energy storage device, carbon materials such as graphite have been used as a negative active material for the energy storage device (see Patent Document 1).

PRIOR ART DOCUMENT

PATENT DOCUMENT

Patent Document 1: JP-A-2005-222933

SUMMARY OF THE INVENTION

PROBLEMS TO BE SOLVED BY THE INVENTION

In such an energy storage device, when graphite is used as a negative active material, the negative active materials may be pressed against each other due to the expansion and shrinkage of the negative active materials with charge-discharge, thereby causing the distance between the negative active materials to be increased or causing the negative active materials to be cracked, and causing the direct current resistance after a charge-discharge cycle to be increased.

An object of the present invention is to provide an energy storage device capable of suppressing an increase in direct current resistance after a charge-discharge cycle.

MEANS FOR SOLVING THE PROBLEMS

An energy storage device according to an aspect of the present invention includes an electrode assembly including a negative electrode and a positive electrode, the negative electrode includes a negative active material layer including a negative active material, the negative active material contains solid graphite, the negative active material layer has a BET specific surface area of 2.1 $m^2/g$ or less, and a pressure applied to the electrode assembly is 0.1 MPa or more.

ADVANTAGES OF THE INVENTION

The energy storage device according to the present invention is capable of suppressing an increase in direct current resistance after a charge-discharge cycle.

BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.

MODE FOR CARRYING OUT THE INVENTION

First, an outline of an energy storage device disclosed in the present specification will be described.

An energy storage device according to an aspect of the present invention includes an electrode assembly including a negative electrode and a positive electrode, the negative electrode includes a negative active material layer including a negative active material, the negative active material contains solid graphite, the negative active material layer has a BET specific surface area of 2.1 $m^2/g$ or less, and a pressure applied to the electrode assembly is 0.1 MPa or more.

The energy storage device according to an aspect of the present invention is capable of suppressing an increase in direct current resistance after a charge-discharge cycle. Although the reason why such an effect is produced is not clear, the following reason is presumed. In the energy storage device, the use of the solid graphite, which is relatively less likely to be cracked among graphite, as the negative active material, makes the negative active material less likely to be cracked even when the negative active material is expanded and shrunk with charge-discharge, thereby making it possible to reduce an increase in direct current resistance due to electron conductivity decreased with the cracked negative active material and an increase in direct current resistance due to film growth on a newly formed surface. In addition, the BET specific surface area of the negative active material layer is 2.1 $m^2/g$ or less, thereby allowing the effect of suppressing an increase in direct current resistance due to contact between the surface of the negative active material layer and an electrolyte to be improved. Furthermore, the fact that the pressure applied to the electrode assembly is 0.1 MPa or more is believed to suppress the expansion and shrinkage of the negative active material with charge-discharge, and then further reduce an increase in direct current resistance after a charge and discharge cycle. Accordingly, the energy storage device is presumed to be capable of suppressing an increase in direct current resistance after a charge-discharge cycle.

The solid graphite in the present invention is particulate graphite particles where the aspect ratio (b/a) a major axis b of the particle to a minor axis a of the particle is less than 5, and the graphite particle inside is filled substantially without any void. More specifically, being "solid" means that in a cross section of a particle observed in a SEM image acquired with the use of a scanning electron microscope (SEM), the void area ratio (porosity) in the particle to the area of the whole particle is 2% or less. Further, in the present invention, graphite with the aspect ratio (b/a) of less than 5 and the porosity of more than 2% is referred to as "hollow graphite".

Examples of the method for measuring the aspect ratio of the graphite particles include the following methods. The graphite particles to be measured are prepared in accordance with the following procedure. When the graphite particles or negative electrode before assembling the energy storage device can be prepared, the graphite particles or negative electrode are used as they are. In the case of preparing from the assembled energy storage device, the energy storage device discharged to an end-of-discharge voltage under normal use at a current of 0. 1C is disassembled in a dry air atmosphere at a dew point of -40°C or lower, the negative electrode is taken out, a part thereof that does not face the positive electrode is then cut out, an electrolyte and the like adhering to the part are washed out with the use of a dimethyl carbonate (DMC), and the part is then dried under reduced pressure at room temperature for 24 hours to prepare a sample for measurement. The sample for measurement may be prepared by disassembling the discharged energy storage device in a dry air atmosphere at a dew point of -40°C or lower, taking out the negative electrode, then cutting out a part that does not face the positive electrode, immersing the part in a solvent capable of dissolving a binder to dissolve the binder in the solvent, separating the negative active material and the solution containing the binder by filtration, and then drying the negative active material under reduced pressure at room temperature for 24 hours. The surface part of the sample for measurement or a cross-sectional part thereof fixed with a thermosetting resin and exposed by a cross section polisher or the like is observed with a scanning electron microscope (SEM) in accordance with the same procedure as for "the void area ratio (porosity) in the particle to the area of the whole particle" described later. The longest major axis b and the longest minor axis a in a direction perpendicular to the major axis b are measured for arbitrary hundred graphite particles, the aspect ratio (b/a) of each of the graphite particles is calculated, and the average value thereof is calculated. Alternatively, the minor axis a and major axis b may be each measured for arbitrary hundred graphite particles, the respective average values may be calculated, and the aspect ratio (b/a) may be calculated from the respective average values.

"The void area ratio (porosity) in the particle to the area of the whole particle" in the graphite particles can be determined by the following procedure.

(1) Preparation of sample for measurement

The negative electrode to be measured is fixed with a thermosetting resin. A cross section polisher is used to expose a cross section of the negative electrode fixed with the resin to prepare a sample for measurement. It is to be noted that the negative electrode to be measured are prepared in accordance with the following procedure. When the negative electrode before assembling the energy storage device can be prepared, the negative electrode is used as it is. In the case of preparing from the assembled energy storage device, first, the energy storage device is subjected to constant current discharge at a current of 0. 1C to an end-of-discharge voltage under normal usage, into a discharged state. The energy storage device in the discharged state is disassembled, the negative electrode is taken out, components (the electrolyte and the like) are then sufficiently washed with a dimethyl carbonate, and then dried under reduced pressure at room temperature for 24 hours. The operations from the disassembly of the energy storage device to the preparation of the negative electrode to be measured are performed in a dry air atmosphere at a dew point of -40°C or lower. The term of under normal usage herein refers to a case of using the energy storage device while employing charge-discharge conditions recommended or specified for the energy storage device, and when a charger for the energy storage device is prepared, refers to a case of using the energy storage device with the charger applied.

(2) Acquisition of SEM image

For acquiring the SEM image, JSM-7001F (manufactured by JEOL Ltd.) is used as a scanning electron microscope. For the SEM image, a secondary electron image is observed. The acceleration voltage is 15 kV. The observation magnification is set such that the number of graphite particles appearing in one field of view is three or more and fifteen or less. The obtained SEM image is stored as an image file. In addition, various conditions such as a spot diameter, a working distance, an irradiation current, luminance, and a focus are appropriately set so as to make the contours of the graphite particles clear.

(3) Cut-out of contour of graphite particle

The contour of the graphite particle is cut out from the acquired SEM image by using an image cutting function of image editing software Adobe Photoshop Elements 11. The contour is cut out by using a quick selection tool to select the outside of the contour of the graphite particle and edit the part excluding the graphite particle to a black background. In this regard, when the number of graphite particles from which the contours have been able to be cut out is less than three, an SEM image is acquired again, and the cut-out is performed until the number of graphite particles from which the contours have been able to be cut out is three or more.

(4) Binarization processing

The image of the first graphite particle among the cut-out graphite particles is subjected to binarization processing with, as a threshold value, a concentration set to be 20% lower than the concentration at which the intensity reaches the maximum, with the use of image analysis software PopImaging 6.00. By the binarization processing, the area on the higher-concentration side is calculated as a "void area $S_1$ in the particles".

Then, the image of the same first graphite particle is subjected to binarization processing with a concentration of 10% as a threshold value. The outer edge of the graphite particle is determined by the binarization processing, and the area inside the outer edge is calculated as an "area $S_0$ of the whole particle".

The ratio of $S_1$ to $S_0$ ($S_1/S_0$) is calculated with the use of $S_1$ and $S_0$ calculated above to calculate a "void area ratio $R_1$ in the particle to the area of the whole particle" in the first graphite particle.

The images of the second and subsequent graphite particles among the cut-out graphite particles are also each subjected to the binarization processing mentioned above, and the areas $S_1$ and $S_0$ are calculated. Based on the calculated area $S_1$ and area $S_0$, void area ratios $R_2$, $R_3$, ... of the respective graphite particles are calculated.

(5) Determination of void area ratio

Among all of the void area ratios $R_1$, $R_2$, $R_3$, ..., calculated by the binarization processing, the numerical values corresponding to the void area ratio $R_n$ of 2% or less are extracted, and the average value thereof is calculated to determine "the void area ratio (porosity) in the particle to the area of the whole particle" of the solid graphite. Among all of the void area ratios $R_1$, $R_2$, $R_3$, ..., calculated by the binarization processing, the numerical values corresponding to the void area ratio $R_n$ of more 2% are extracted, and the average value thereof is calculated to determine "the void area ratio (porosity) in the particle to the area of the whole particle" of the hollow graphite.

It is to be noted that, instead of the scanning electron microscope used for "the acquisition of the SEM image", the image editing software used for "the cut-out of the contours of the graphite particles", and the image analysis software used for the "binarization processing", apparatuses, software, and the like capable of the corresponding measurement, image editing, and image analysis may be used.

The term "BET specific surface area of the negative active material layer" is determined by immersing a sample to be measured of the negative active material layer in liquid nitrogen for cooling the sample, and measuring the pressure and the amount of nitrogen adsorption in the case based on the fact that nitrogen molecules are physically adsorbed on the particle surfaces by supplying a nitrogen gas.

Specifically, the BET specific surface area is measured by the following method. The amount ($m^2$) of nitrogen adsorption on the sample is determined by a one-point method with the use of a specific surface area measurement apparatus (trade name: MONOSORB) manufactured by YUASA IONICS Co., Ltd. The value obtained by dividing the obtained amount of adsorption by the mass (g) of the sample to be measured is defined as the BET specific surface area ($m^2$/g). In the measurement, cooling with the use of liquid nitrogen is performed. In addition, preheating is performed at 120°C for 15 minutes before the cooling. The amount of the loaded sample to be measured is 0.5 g $\pm$ 0.01 g. Further, the sample to be measured of the negative active material layer to be subjected to the measurement of the BET specific surface area is prepared by the following method. The energy storage device is subjected to constant current discharge at a current of 0.05C to the lower limit voltage under normal use. The energy storage device is disassembled, the negative electrode is taken out as a working electrode, and a half cell is assembled with metal Li as a counter electrode. The half cell is subjected to constant current charge at a current of 10 mA per 1 g of the negative active material until the potential of the working electrode reaches 2.0 V vs. Li/Li$^+$. It is to be noted that applying a current so as to increase the potential of the working electrode is referred to as charge herein. The half cell is disassembled, and the working electrode is then taken out, and sufficiently washed with a dimethyl carbonate. After drying the working electrode under reduced pressure at room temperature for 24 hours, the negative active material layer is collected and then used as a sample to be measured. In a sample tube for measurement, 1.00 g of a powder of the sample to be measured (negative active material layer) is put, and dried under reduced pressure at 120°C for 12 hours to sufficiently remove moisture in the sample to be measured. Next, after cooling with the use of liquid nitrogen and vacuum evacuation, an adsorption isotherm is measured by a nitrogen gas adsorption method within the range of a relative pressure P/P0 (P0 = about 770 mmHg) from 0 to 1. Five points are extracted from a region with P/P0 = 0.05 to 0.3 of the adsorption isotherm obtained, BET plotting is then performed, and the BET specific surface area is calculated from the y-intercept and slope of the straight line. The disassembly of the energy storage device to the collection of the negative active material layer are performed in an argon atmosphere at a dew point of -60°C or lower.

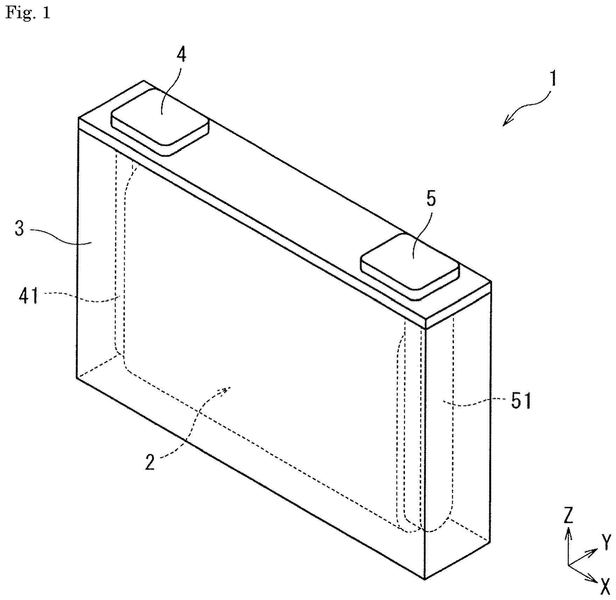

"The pressure applied to the electrode assembly" is a pressure applied in the stacking direction (Y direction in Fig. 1) of the stacked positive electrode, negative electrode, and separator. In addition, the pressure applied to the electrode assembly has a value measured by the following method.

(i) In the case of a load applied to the energy storage device by a pressurizing member or the like

First, the energy storage device, with a load applied thereto by a pressurizing member or the like, is subjected to constant current discharge to the lower limit voltage under normal use, and then placed in an X-ray computed tomography (CT) apparatus. Scanning is performed along a direction parallel to the stacking direction (Y direction in Fig. 1) of the electrode assembly to check whether or not at least a part of the surface of the electrode assembly with the load applied to the surface (typically, the surface orthogonal to the stacking direction of the electrode assembly, the XZ plane in Fig. 1) has direct or indirect contact with the inner surface of the case. When the surface of the electrode assembly with the load applied to the surface has no direct or indirect contact with the inner surface of the case, the pressure applied to the electrode assembly is considered as 0 MPa. When the surface of the electrode assembly with the load applied to the surface has direct or indirect contact with the inner surface of the case, the load applied to the electrode assembly is measured by using an autograph in accordance with the following procedure. The energy storage device with the load applied thereto by the pressurizing member or the like is placed in the autograph, so as to have an orientation such that a probe has contact with the surface of the electrode assembly with the load applied to the surface. A load that is sufficiently smaller than the load applied by the pressurizing member or the like is applied by the autograph to the energy storage device in the stacking direction (Y direction in Fig. 1) of the energy storage device. In this condition, the load applied by the pressurizing member or the like is released with the probe position of the autograph remaining maintained, that is, with the thickness of the energy storage device remaining maintained. In this case, the amount of change in the load measured by the autograph is defined as the load applied to the electrode assembly. The value obtained by dividing the load applied to the electrode assembly by the area of the surface of contact between the case and the electrode assembly is defined as the pressure applied to the electrode assembly. Further, typically, the load is applied by the pressurizing member or the like to a pair of facing surfaces of the energy storage device, and the area of only one surface of the pair of surfaces is defined as the area of the surface with the load applied thereto.

(ii) In the case of no load applied to the energy storage device by a pressurizing member or the like

When the energy storage device is bound by a restraining member or the like, without any load applied by the restraining member or the like, the pressure applied to the electrode assembly is measured in accordance with the following procedure. First, the energy storage device is subjected to constant current discharge to the lower limit voltage under normal use, and then placed in an X-ray CT apparatus. Scanning is performed along a direction parallel to the stacking direction (Y direction in Fig. 1) of the electrode assembly to check whether or not at least a part of the surface orthogonal to the stacking direction of the electrode assembly (the XZ plane in Fig. 1) has direct or indirect contact with the inner surface of the case. When the surface orthogonal to the stacking direction of the electrode assembly has no direct or indirect contact with the inner surface of the case, the pressure applied to the electrode assembly is considered as 0 MPa. When the surface orthogonal to the stacking direction of the electrode assembly has direct or indirect contact with the inner surface of the case, an X-ray transmission image of the electrode assembly is captured, and the maximum thickness in the stacking direction of the electrode assembly is measured. The energy storage device is disassembled, the electrode assembly is taken out, and the electrode assembly is placed in the autograph, so as to have an orientation such that a probe has contact with the surface orthogonal to the stacking direction of the electrode assembly. A load is gradually applied by autograph to the surface orthogonal to the stacking direction of the electrode assembly, and the electrode assembly is compressed to the maximum thickness in the stacking direction of the electrode assembly, measured from the X-ray transmission image. In this case, the load measured by the autograph is defined as the load applied to the electrode assembly. The value obtained by dividing the load applied to the electrode assembly by the area of the surface of contact between the case and the electrode assembly is defined as the pressure applied to the electrode assembly. Further, typically, the load is applied by the case or the like to a pair of facing surfaces of the electrode assembly, and the area of only one surface of the pair of surfaces is defined as the area of the surface with the load applied thereto.

The negative active material preferably further includes scaly graphite. The scaly graphite is, because of its shape, capable of enhancing conductivity, for example, with the increased number of contact points with the other particles, and further improving the effect of suppressing an increase in the direct current resistance of the energy storage device after a charge-discharge cycle.

In this regard, the "scaly graphite" refers to graphite that satisfies the aspect ratio (b/a) of 5 or more, which is the major axis b of particles of the scaly graphite to the minor axis a of the particles.

The aspect ratio of the scaly graphite can be measured by the same method as that for the above-described aspect ratio of the graphite particles.

The content of the solid graphite in the negative active material is preferably 50% by mass or more. The content of the solid graphite is 50% by mass or more, thereby allowing the effect of suppressing an increase in the direct current resistance of the energy storage device after a charge-discharge cycle to be further improved.

The difference between D90 and D10 in the particle size distribution of the negative active material layer is preferably 40 pm or less. The difference between D90 and D10 in the particle size distribution of the negative active material layer is 40 pm or less, thereby making the charge-discharge reaction homogeneous, and allowing the negative active material to be kept from being locally deteriorated, and thus, the increase in the direct current resistance of the energy storage device after a charge-discharge cycle can be further suppressed. In this regard, the term "D90" refers to a value at which a volume-based integrated distribution calculated in accordance with JIS-Z-8819-2 (2001) is 90%, based on a particle size distribution measured by a laser diffraction/scattering method for a diluted solution obtained by diluting particles with a solvent in accordance with JIS-Z-8825 (2013), and the term "D10" refers to a value at which the volume-based integrated distribution is 10%.

The configuration of an energy storage device, the configuration of an energy storage apparatus, and a method for manufacturing the energy storage device according to an embodiment of the present invention, and other embodiments will be described in detail. It is to be noted that the names of the respective constituent members (respective constituent elements) for use in the respective embodiments may be different from the names of the respective constituent members (respective elements) for use in the background art.

<Configuration of energy storage device>

An energy storage device according to an embodiment of the present invention includes: an electrode assembly including a positive electrode, a negative electrode, and a separator; a nonaqueous electrolyte; and a case that houses the electrode assembly and the nonaqueous electrolyte. The electrode assembly is typically a stacked type obtained by stacking a plurality of positive electrodes and a plurality of negative electrodes with separators interposed therebetween, or a wound type obtained by winding a positive electrode and a negative electrode stacked with a separator interposed therebetween. The nonaqueous electrolyte is present to be contained in the positive electrode, the negative electrode, and the separator. A nonaqueous electrolyte secondary battery (hereinafter, also referred to simply as a "secondary battery") will be described as an example of the energy storage device.

(Positive electrode)

The positive electrode includes a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^7$ $\Omega$ ·cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, particularly preferably 10 pm or more and 25 pm or less. When the average thickness of the positive substrate falls within the range mentioned above, the energy density per volume of the secondary battery can be increased while increasing the strength of the positive substrate.

The intermediate layer is a layer disposed between the positive substrate and the positive active material layer. The intermediate layer includes a conductive agent such as carbon particles, thereby reducing the contact resistance between the positive substrate and the positive active material layer. The configuration of the intermediate layer is not particularly limited, and includes, for example, a binder and a conductive agent.

The positive active material layer includes a positive active material. The positive active material layer includes optional components such as a conductive agent, a binder (binding agent), a thickener, and a filler, if necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-\gamma)}$]O$_2$ ($0 \leq x < 0.5$, $0 < \gamma < 1$), Li[Li$_x$Co$_{(1-x)}$]O$_2$ ($0 \leq x < 0.5$), Li[Li$_x$Ni$_\gamma$Mn$_{(1-x-\gamma)}$]O$_2$ ($0 \leq x < 0.5$, $0 < \gamma < 1$), Li[Li$_x$Ni$_\gamma$Mn$_\beta$Co$_{(1-x-\gamma-\beta)}$]O$_2$ ($0 \leq x < 0.5$, $0 < \gamma$, $0 < \beta$, $0.5 < \gamma + \beta < 1$), and Li[Li$_x$Ni$_\gamma$Co$_\beta$Al$_{(1-x-\gamma-\beta)}$]O$_2$ ($0 \leq x < 0.5$, $0 < \gamma$, $0 < \beta$, $0.5 < \gamma + \beta < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the poly-anion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer, one of these materials may be used alone, or two or more thereof may be used in mixture.

The positive active material is typically particles (powder). The average particle size of the positive active material is preferably 0.1 pm or more and 20 pm or less, for example. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer is improved. It is to be noted that in the case of using a composite of the positive active material and another material, the average particle size of the composite is regarded as the average particle size of the positive active material. The "average particle size" means a value (D50) at which the volume-based integrated distribution in the particle size distribution is 50%.

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As the classification method, a sieve, a wind classifier, or the like is used both in dry manner and in wet manner, if necessary.

The content of the positive active material in the positive active material layer is preferably 50% by mass or more and 99% by mass or less, more preferably 70% by mass or more and 98% by mass or less, still more preferably 80% by mass or more and 95% by mass or less. When the content of the positive active material falls within the range mentioned above, a balance can be achieved between the high energy density and productivity of the positive active material layer.

The conductive agent is not particularly limited as long as the agent is a material with conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used alone, or two or more thereof may be used in mixture.

In addition, these materials may be used in combination. For example, a composite material of carbon black and CNT may be used. Among these materials, carbon black is preferable from the viewpoints of electron conductivity and coatability, and in particular, acetylene black is preferable.

The content of the conductive agent in the positive active material layer is preferably 1% by mass or more and 10% by mass or less, more preferably 3% by mass or more and 9% by mass or less. The content of the conductive agent falls within the range mentioned above, thereby allowing the energy density of the secondary battery to be increased.

Examples of the binder mentioned above include: thermoplastic resins such as fluororesins (e.g., polytetrafluoroethylene (PTFE), polyvinylidene fluoride (PVDF)), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer is preferably 1% by mass or more and 10% by mass or less, more preferably 2% by mass or more and 9% by mass or less. The content of the binder falls within the range mentioned above, thereby allowing the active material to be stably held.

Examples of the thickener include polysaccharide polymers such as a carboxymethylcellulose (CMC) and a methylcellulose. When the thickener mentioned above has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

(Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel or a nickel-plated steel, an alloy thereof, a carbonaceous material, or the like is used. Among these metals and alloys, the copper or copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. The average thickness of the negative substrate falls within the range mentioned above, thereby allowing the energy density per volume of the secondary battery to be increased while increasing the strength of the negative substrate.

The negative active material layer includes a negative active material. The negative active material layer includes optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The negative active material contains solid graphite. The use of the solid graphite, which is relatively less likely to be cracked among graphite, as the negative active material, makes the negative active material less likely to be cracked even when the negative active material is expanded and shrunk with charge-discharge, thereby making it possible to reduce an increase in direct current resistance due to electron conductivity decreased with cracks.

The above-mentioned void area ratio (porosity) in the particle to the area of the whole particle in the cross section of the solid graphite, observed in the SEM image, is 2% or less, more preferably 1.5% or less, still more preferably 1% or less. The lower limit of the area ratio (porosity) may be 0% or 0.1%.

The solid graphite may be natural graphite or artificial graphite, but is preferably artificial graphite. The solid graphite is artificial graphite, thereby making the negative active material less likely to be cracked, and making it possible to further reduce an increase in direct current resistance due to electron conductivity decreased with cracks. In this regard, the artificial graphite is a generic term for graphite artificially produced by heat-treating a raw material such as coke for graphitization thereof. The artificial graphite may have two peaks appearing at diffraction angles $2\theta$ in the range from 40° to 50° in an X-ray diffraction pattern obtained with the use of $CuK\alpha$, measured before charge-discharge or in a discharged state. These two peaks are considered as peaks derived from a hexagonal structure. In the case of natural graphite, typically, two peaks derived from a hexagonal structure and two peaks derived from a rhombohedral structure are considered appearing at diffraction angles $2\theta$ in the range from 40° to 50°.

The lower limit of the average particle size (D50) of the solid graphite is preferably 8 pm, more preferably 10 pm in some cases, more preferably 12 pm, still more preferably 14 pm, even more preferably 16 pm. In contrast, the upper limit of the average particle size (D50) of the solid graphite is preferably 25 pm, more preferably 22 pm, more preferably 20 pm in some cases. The average particle size (D50) of the solid graphite is equal to or more than the lower limit mentioned above, or equal to or lower than the upper limit mentioned above, thereby further suppressing an increase in direct current resistance after a charge-discharge cycle because of the packing density further optimized and the like. In this regard, "D50" refers to a value at which the volume-based integrated distribution in the particle size distribution is 50%.

As the negative active material, other negative active materials than solid graphite may be contained. Examples of the other negative active materials include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite other than solid graphite and non-graphitic carbon (easily graphitizable carbon or hardly graphitizable carbon). In the negative active material layer, one of these materials may be used alone, or two or more thereof may be used in mixture.

As the other negative active materials, among these materials, the graphite other than solid graphite is preferable, scaly graphite and hollow graphite are preferable, and scaly graphite is more preferable. The scaly graphite is, because of its shape, capable of enhancing conductivity, for example, with the increased number of contact points with the other particles, and further improving the effect of suppressing an increase in the direct current resistance of the energy storage device after a charge-discharge cycle.

The term "graphite" refers to a carbon material in which the average lattice spacing ($d_{002}$) of the (002) plane determined by an X-ray diffraction method before charge-discharge or in a discharged state is 0.33 nm or more and less than 0.34 nm.

In this regard, the "discharged state" means a state discharged such that lithium ions that can be occluded and released in association with charge-discharge are sufficiently released from the carbon material as the negative active material. For example, the "discharged state" refers to a state where the open circuit voltage is 0.7 V or higher in a half cell that has, for use as a working electrode, a negative electrode containing a carbon material as a negative active material, and has metal Li for use as a counter electrode.

The negative active material is typically particles (powder). The average particle size (D50) of the other negative active material than the solid graphite mentioned above, can be, for example, 1 nm or more and 100 $\mu$m or less. When the other negative active material is a carbon material, a titanium-containing oxide, or a polyphosphoric acid compound, the average particle size thereof may be 1 pm or more and 100 pm or less. When the other negative active material is Si, Sn, an oxide of Si, an oxide of Sn, or the like, the average particle size thereof may be 1 nm or more and 1 pm or less. By setting the average particle size of the other negative active material to be equal to or more than the lower limit mentioned above, the negative active material is easily produced or handled. By setting the average particle size of the other negative active material to be equal to or less than the upper limit mentioned above, the electron conductivity of the positive active material layer is improved. A crusher or a classifier is used to obtain a powder with a predetermined particle size. The crushing method and classification method can be selected from, for example, the methods exemplified for the positive electrode.

The lower limit of the content of the solid graphite in the negative active material is preferably 40% by mass, more preferably 45% by mass in some cases, more preferably 50% by mass, still more preferably 55% by mass, 58% by mass, or 60% by mass, even more preferably 65% by mass, particularly preferably 70% by mass. The content of the solid graphite is equal to or more than the lower limit mentioned above, thereby allowing the effect of suppressing an increase in the direct current resistance of the energy storage device after a charge-discharge cycle to be further improved. In addition, the upper limit of the content of the solid graphite is not particularly limited, and may be 100% by mass, may be 90% by mass, may be 88% by mass, 85% by mass, or 82% by mass, or may be 80% by mass.

When the negative active material contains scaly graphite, the upper limit of the content of the scaly graphite in the negative active material is, for example, preferably 20% by mass, more preferably 18% by mass, 15% by mass, or 12% by mass, more preferably 10% by mass.

The content of the negative active material in the negative active material layer is preferably 60% by mass or more and 99% by mass or less, and more preferably 90% by mass or more and 98% by mass or less. The content of the negative active material falls within the range mentioned above, thereby allowing a balance to be achieved between the increased energy density and productivity of the negative active material layer.

The upper limit of the BET specific surface area of the negative active material layer is 2.1 $m^2$/g or less, preferably 2.0 $m^2$/g, more preferably 1.9 $m^2$/g in some cases, and may be 1.8 $m^2$/g. The BET specific surface area of the negative active material layer is set to be equal to or less than the upper limit mentioned above, thereby allowing the effect of suppressing an increase in resistance at the surface of the negative active material layer to be improved. The lower limit of the BET specific surface area of the negative active material layer is preferably 1.0 $m^2$/g, more preferably 1.2 $m^2$/g in some cases, more preferably 1.5 $m^2$/g. The BET specific surface area of the negative active material layer is set to be equal to or more than the lower limit mentioned above, thereby allowing the initial direct current resistance to be reduced.

The upper limit of the difference between D90 and D10 in the particle size distribution of the negative active material layer is preferably 40 pm, more preferably 38 pm. The difference between D90 and D10 is equal to or less than the upper limit mentioned above, thereby making the charge-discharge reaction homogeneous, and allowing the negative active material to be kept from being locally deteriorated, and thus, the increase in the direct current resistance of the energy storage device after a charge-discharge cycle can be further suppressed. The lower limit of the difference between D90 and D10 in the particle size distribution of the negative active material layer is preferably 25 pm, more preferably 30 pm. The difference between D90 and D10 is equal to or more than the lower limit mentioned above, thereby allowing the density of the pressed negative active material layer to be increased.

(Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

(Load on electrode assembly)

The electrode assembly has a load applied thereto in all states from the SOC of 0% to the SOC of 100%. The load on the electrode assembly is applied in the thickness direction of each of the positive electrode, negative electrode, and separator stacked, that is, in the stacking direction. It is to be noted that the electrode assembly may have a part to which no load is applied, such as an end of the electrode assembly. In the secondary battery, the load is applied to the electrode assembly as described above, thereby allowing an increase in direct current resistance after a charge-discharge cycle to be suppressed. The reason why the increase in direct current resistance can be suppressed by the load applied to the electrode assembly is not clear, but for example, the suppressed expansion of the negative active material is presumed to make it possible to reduce a decrease in electron conductivity due to the cracked negative active material and an increase in direct current resistance due to film growth on a newly formed surface, and the reduced gaps in the electrode assembly are presumed to make the gas generated by charge-discharge less likely to be accumulated in the electrode assembly. The load can be applied to the electrode assembly by a pressurizing member or the like described later.

The lower limit of the pressure applied to the electrode assembly is 0.1 MPa, preferably 0.15 MPa, more preferably 0.2 MPa. The pressure is set to be equal to or more than the lower limit mentioned above, thereby suppressing the expansion and shrinkage of the negative active material with charge-discharge, and then further suppressing an increase in direct current resistance after a charge and discharge cycle. In contrast, the upper limit of the pressure applied to the electrode assembly is preferably 2.0 MPa, more preferably 1.0 MPa. The pressure is set to be equal to or less than the upper limit mentioned above, thereby keeping an excessive pressure from being applied to the positive electrode and the negative electrode, and keeping the positive active material and the negative active material from being cracked.

(Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some of the hydrogen atoms included in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, the volume ratio of the cyclic carbonate to the chain carbonate (cyclic carbonate : chain carbonate) preferably falls within the range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these salts, the lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these salts, the inorganic lithium salts are preferable, and $LiPF_6$ is more preferable.

The content of the electrolyte salt in the nonaqueous electrolyte solution is, at 20°C under 1 atm, preferably 0.1 mol/dm$^3$ or more and 2.5 mol/dm$^3$ or less, more preferably 0.3 mol/dm$^3$ or more and 2.0 mol/dm$^3$ or less, still more preferably 0.5 mol/dm$^3$ or more and 1.7 mol/dm$^3$ or less, particularly preferably 0.7 mol/dm$^3$ or more and 1.5 mol/dm$^3$ or less. The content of the electrolyte salt falls within the range mentioned above, thereby allowing the ionic conductivity of the nonaqueous electrolyte solution to be increased.

The nonaqueous electrolyte solution may include an additive, besides the nonaqueous solvent and the electrolyte salt. Examples of the additive include oxalic acid salts such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used alone, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less, with respect to a total mass of the nonaqueous electrolyte solution. The content of the additive falls within the range mentioned, thereby making it possible to improve capacity retention performance or cycle performance after high-temperature storage, and to further improve safety.

For the nonaqueous electrolyte, a solid electrolyte may be used, or a nonaqueous electrolyte solution and a solid electrolyte may be used in combination.

The solid electrolyte can be selected from arbitrary materials with ionic conductivity, which are solid at normal temperature (for example, from 15°C to 25°C), such as lithium, sodium and calcium. Examples of the solid electrolyte include a sulfide solid electrolyte, an oxide solid electrolyte, an oxynitride solid electrolyte, polymer solid electrolyte, and a gel polymer electrolyte.

Examples of the sulfide solid electrolyte include $Li_2S-P_2S_5$, LiI-$Li_2S-P_2S_5$, and $Li_{10}Ge-P_2Si_2$ in the case of a lithium ion secondary battery.

The shape of the energy storage device according to the present embodiment is not to be considered particularly limited, and examples thereof include cylindrical batteries, prismatic batteries, flattened batteries, coin batteries and button batteries.

Fig. 1 illustrates an energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

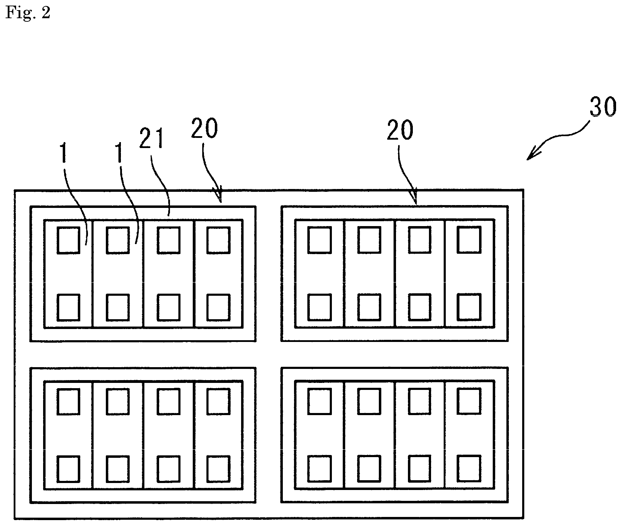

The load can be applied to the electrode assembly 2 in the energy storage device 1 of Fig. 1 by, for example, a pressurizing member (not shown) that pressurizes the case 3 from the outside. The pressurizing member may be a restraining member that restrains the shape of the case 3. The pressurizing member (restraining member) is provided, for example, so as to sandwich the electrode assembly 2 from the both surfaces (the surface on the front side and the surface on the back side in Fig. 1) in the stacking direction (Y direction in Fig. 1) with the case 3 interposed between the pressurizing member and the electrode assembly 2 and then pressurize the case 3. The both surfaces of the electrode assembly 2 have direct contact with the inner surface of the case 3, or have contact with the inner surface with another member, not shown, interposed therebetween. Thus, the case 3 is pressurized to apply a load to the electrode assembly 2. The both surfaces of the electrode assembly 2 preferably have direct contact with the inner surface of the case 3, or have contact with the inner surface with another member, not illustrated, interposed therebetween while the case 3 is not pressurized. Examples of the pressurizing member (restraining member) include a restraining band and a metallic frame. Further, as in Fig. 2 described later, a plurality of energy storage devices 1 may be arranged in a row in the stacking direction (Y direction in Fig. 1, horizontal direction in Fig. 2) of the electrode assembly 2, and may be fixed by using a restraining member 21 such as a frame, with the plurality of energy storage devices 1 pressurized from both ends in the stacking direction.

<Energy storage apparatus>

The energy storage device according to the present embodiment can be mounted as an energy storage unit (battery module) configured with a plurality of energy storage devices 1 assembled, on power sources for automobiles such as electric vehicles (EV), hybrid vehicles (HEV), and plug-in hybrid vehicles (PHEV), power sources for electronic devices such as personal computers and communication terminals, power sources for power storage, or the like. In this case, the technique of the present invention may be applied to at least one energy storage device included in the energy storage unit.

Fig. 2 illustrates an example of an energy storage apparatus 30 obtained by further assembling energy storage units 20 that each have two or more electrically connected energy storage devices 1 assembled. For the energy storage unit 20, the plurality of energy storage devices 1 are arranged in the stacking direction with no gap therebetween, and restrained by the restraining member 21 in a fixed size so as to be keep constant in thickness and pressurized from the stacking direction (horizontal direction in Fig. 2). The energy storage apparatus 30 may include a busbar (not shown) that electrically connects two or more energy storage devices 1, a busbar (not shown) that electrically connects two or more energy storage units 20, and the like. The energy storage unit 20 or the energy storage apparatus 30 may include a state monitor (not shown) that monitors the conditions of one or more energy storage devices.

<Method for manufacturing energy storage device>

A method for manufacturing the energy storage device according to the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

The above-mentioned method for manufacturing the energy storage device may further include attaching a pressurizing member such as a restraining member. In addition, a method for manufacturing an energy storage apparatus including a plurality of energy storage devices may include attaching a pressurizing member such as a restraining member to the plurality of energy storage devices.

<Other embodiments>

It is to be noted that the energy storage device according to the present invention is not to be considered limited to the embodiment mentioned above, and various changes may be made without departing from the scope of the present invention. For example, to the configuration according to one embodiment, the configuration according to another embodiment can be added, and a part of the configuration according to one embodiment can be replaced with the configuration according to another embodiment or a well-known technique. Furthermore, a part of the configuration according to one embodiment can be deleted. In addition, a well-known technique can be added to the configuration according to one embodiment.

While the case where the energy storage device is used as a nonaqueous electrolyte secondary battery (for example, lithium ion secondary battery) that can be charged and discharged has been described in the embodiment mentioned above, the type, shape, dimensions, capacity, and the like of the energy storage device are arbitrary. The present invention can also be applied to various secondary batteries, and capacitors such as electric double layer capacitors and lithium ion capacitors.

While the electrode assembly with the positive electrode and the negative electrode stacked with the separator interposed therebetween has been described in the embodiment mentioned above, the electrode assembly may include no separator. For example, the positive electrode and the negative electrode may be brought into direct contact with each other, with a non-conductive layer formed on the active material layer of the positive electrode or negative electrode.

EXAMPLES

Hereinafter, the present invention will be described more specifically with reference to examples. The present invention is not limited to the following examples.

[Example 1]

(Fabrication of negative electrode)

The solid graphite, hollow graphite, and scaly graphite listed in Table 1 as negative active materials, a styrene butadiene rubber (SBR) as a binder, a carboxymethyl cellulose (CMC) as a thickener, and water as a dispersion medium were mixed to prepare a negative composite paste (negative active material layer forming material). Artificial graphite with the porosity listed in Table 1 and an aspect ratio of less than 5 was used as the solid graphite, and natural graphite with the porosity listed in Table 1 and an aspect ratio of less than 5 was used as the hollow graphite. The aspect ratio of the scaly graphite was 5 or more. The porosities of the artificial graphite, natural graphite, and scaly graphite have values obtained by separately preparing negative electrodes each containing only the artificial graphite, only the natural graphite, or only the scaly graphite as a negative active material and measuring the porosities of the negative electrodes by the method described above. The ratio by mass of the negative active material, binder, and thickener were 97 : 2 : 1.

The negative composite paste was prepared through a mixing step with the use of a multi-blender mill, with the viscosity adjusted by adjusting the amount of watery. The negative composite paste was applied to both surfaces of a copper foil as a negative substrate, and dried. Thereafter, roll pressing was performed to obtain a negative electrode. D10 and D90 in the particle size distribution of the negative active material, measured by the method above were respectively 9.1 pm and 53.8 pm, and the BET specific surface area of the negative active material layer, measured by the method mentioned above was 2.0 $m^2/g$.

(Fabrication of positive electrode)

A positive composite paste was prepared with the use of $LiNi_{0.6}Co_{0.2}Mn_{0.2}O_2$ as a positive active material, acetylene black (AB) as a conductive agent, a polyvinylidene fluoride (PVDF) as a binder, and an N-methylpyrrolidone (NMP) as a dispersion medium. It is to be noted that the ratios by mass of the positive active material, conductive agent, and binder were 90 : 5 : 5 (in terms of solid content). The positive composite paste was applied to both surfaces of an aluminum foil as a positive substrate, and dried. Thereafter, roll pressing was performed to obtain a positive electrode.

(Nonaqueous electrolyte solution)

A nonaqueous electrolyte solution was obtained by dissolving $LiPF_6$ at a concentration of 1.2 $mol/dm^3$ in a solvent obtained by mixing an ethylene carbonate (EC), a dimethyl carbonate (DMC), and an ethyl methyl carbonate (EMC) at ratios by volume of 30 : 35 : 35.

(Separator)

A polyethylene porous resin film made with a thickness of 25 pm was used as a separator.

(Assembly of energy storage device)

The positive electrode, the negative electrode, and the separator were stacked to obtain an electrode assembly. The electrode assembly was sealed in a case formed from a metal-resin composite film, a nonaqueous electrolyte solution was injected therein, and the case is then sealed. A restraining member for restraining in a fixed size in the stacking direction from both surfaces of the case was attached to obtain an energy storage device according to Example 1 with a load applied thereto such that the pressure applied to the electrode assembly was 0.1 MPa.

[Example 2 and Comparative Examples 1 to 8]

Respective energy storage device according to Example 2 and Comparative Examples 1 to 8 were obtained similarly to Example 1, except for using the materials listed in Table 1 as negative active materials, and changing the content ratio of the negative active material and the pressure applied to the electrode assembly as shown in Table 2. Table 2 shows therein D10 and D90 in the particle size distribution of the negative active material layer and the BET specific surface area for each of the energy storage device.

[Table 1]

| | Negative active material | | | | | | | | | | | | | | |
| --- | --- | --- | --- | --- | --- | --- | --- | --- | --- | --- | --- | --- | --- | --- | --- |
| | Natural graphite physical properties | | | | | Artificial graphite physical properties | | | | | Scaly graphite physical properties | | | | |
| | D10 [$\mu m$] | D50 [$\mu m$] | D90 [$\mu m$] | Porosity [%] | BET specific surface area [m$^2$/g] | D10 [$\mu m$] | D50 [$\mu m$] | D90 [$\mu m$] | Porosity [%] | BET specific surface area [m$^2$/g] | D10 [$\mu m$] | D50 [$\mu m$] | D90 [$\mu m$] | Porosity [%] | BET specific surface area [m$^2$/g] |
| Comparative Example 1 | 13 | 17 | 23 | 10.4 | 3.9 | 7 | 17 | 30 | 1.0 | 1.4 | 4.0 | 10.3 | 23.2 | 0.0 | 7.7 |
| Comparative Example 2 | 8 | 14 | 24 | 20.7 | 2.8 | 4 | 12 | 28 | 0.7 | 4.1 | | | | | |
| Comparative Example 3 | - | - | - | - | - | 4 | 12 | 28 | 0.7 | 4.1 | | | | | |
| Comparative Example 4 | 8 | 14 | 24 | 20.7 | 2.8 | 8 | 20 | 42 | 0.9 | 2.3 | | | | | |
| Comparative Example 5 | - | - | - | - | - | 5 | 18 | 37 | 0.8 | 4.1 | | | | | |
| Comparative Example 6 | 13 | 17 | 23 | 10.4 | 3.9 | 7 | 17 | 30 | 1.0 | 1.4 | | | | | |
| Comparative Example 7 | 8 | 14 | 24 | 20.7 | 2.8 | 4 | 12 | 28 | 0.7 | 4.1 | | | | | |
| Comparative Example 8 | - | - | - | - | - | 4 | 12 | 28 | 0.7 | 4.1 | | | | | |
| Example 1 | 8 | 14 | 24 | 20.7 | 2.8 | 8 | 20 | 42 | 0.9 | 2.3 | | | | | |
| Example 2 | - | - | - | - | - | 5 | 18 | 37 | 0.8 | 4.1 | | | | | |

[Table 2]

| | Positive electrode | Negative active material | | | Negative active material layer | | | | Pressure applied to electrode assembly (MPa) | Evaluation |
| | Positive active material | Natural graphite content [% by mass] | Artificial graphite content [% by mass] | Scaly graphite content [% by mass] | D10 [μm] | D90 [μm] | D90-D10 [μm] | BET specific surface area [m²/g] | | (45°C, 1000 cycles) Rate of increase in DCR at 25°C after charge-discharge cycle [%] |
|---|---|---|---|---|---|---|---|---|---|---|
| Comparative Example 1 | NCM622 | 40 | 40 | 20 | 9.9 | 72.9 | 63.0 | 2.3 | 0 | 25 |
| Comparative Example 2 | NCM622 | 24 | 71 | 5 | 4.3 | 24.5 | 20.2 | 2.3 | 0 | 20 |
| Comparative Example 3 | NCM622 | 0 | 95 | 5 | 3.9 | 27.8 | 23.9 | 2.2 | 0 | 15 |
| Comparative Example 4 | NCM622 | 45 | 45 | 10 | 9.1 | 53.8 | 44.7 | 2.0 | 0 | 20 |
| Comparative Example 5 | NCM622 | 0 | 95 | 5 | 5.1 | 39.7 | 34.6 | 2.0 | 0 | 14 |
| Comparative Example 6 | NCM622 | 40 | 40 | 20 | 9.9 | 72.9 | 63.0 | 2.3 | 0.1 | 19 |
| Comparative Example 7 | NCM622 | 24 | 71 | 5 | 4.3 | 24.5 | 20.2 | 2.3 | 0.1 | 18 |
| Comparative Example 8 | NCM622 | 0 | 95 | 5 | 3.9 | 27.8 | 23.9 | 2.2 | 0.1 | 13 |
| Example 1 | NCM622 | 45 | 45 | 10 | 9.1 | 53.8 | 44.7 | 2.0 | 0.1 | 10 |
| Example 2 | NCM622 | 0 | 95 | 5 | 5.1 | 39.7 | 34.6 | 2.0 | 0.1 | 6 |

[Evaluation]

(1-1) Initial charge-discharge

The obtained respective energy storage devices were subjected to initial charge-discharge under the following conditions. In a thermostatic chamber at 25°C, the energy storage devices were subjected to constant current charge at a charge current of 1.0C and an end-of-charge voltage of 4.20 V, and then to constant voltage charge at 4.20 V With regard to the charge termination conditions, the charge was performed until the total charge time reached 3 hours. Thereafter, a pause period of 10 minutes was provided. The energy storage devices were subjected to constant current discharge at a discharge current of 1.0C and an end-of-discharge voltage of 2.75 V

(1-2) Initial direct current resistance

The respective energy storage devices subjected to the initial charge-discharge were subjected to constant current charge at a charge current of 1.0C in a thermostatic chamber at 25 °C to the SOC of 50%. The energy storage devices were stored in a thermostatic chamber at 25°C for 3 hours or more, and then discharged for 30 seconds at each of currents of 0.2 C, 0.5 C, and 1.0 C in this order. After completion of each discharge, the energy storage devices were subjected to constant current charge at a current of 0.2C to the SOC of 50%. The relationship between the current in each discharge and the voltage at 10 seconds after the start of the discharge was plotted, and the direct current resistance was determined as an initial direct current resistance from the slope of a straight line obtained from the plot of three points.

(1-3) Charge-discharge cycle test

Next, the following charge-discharge cycle test was performed. At 45°C, the energy storage devices were subjected to constant current charge at a charge current of 1.0C and an end-of-charge voltage of 4.20 V, and then to constant voltage charge at 4.20 V With regard to the charge termination conditions, the charge was performed until the total charge time reached 3 hours. Thereafter, a pause period of 10 minutes was provided. The energy storage devices were subjected to constant current discharge at a discharge current of 1.0 C and an end-of-discharge voltage of 2.75 V, and then, a pause period of 10 minutes was provided. The steps of charge and discharge were regarded as one cycle, and 1000 cycles were performed.

(1-4) Direct current resistance after charge-discharge cycle test

For each of the energy storage devices subjected to the charge-discharge cycle test, the direct current resistance was determined by the same method as for the initial direct current resistance mentioned above, as a direct current resistance after the charge-discharge cycle test. Then, the rate of increase in direct current resistance [%] at 25°C after the charge-discharge cycle was calculated by the following formula.

$$\text{Rate of increase in direct current resistance [\%] at 25°C after}$$

$$\text{charge-discharge cycle} =$$

$$(\text{direct current resistance after charge-discharge cycle test/initial}$$

$$\text{direct current resistance}) \times 100 - 100$$

Table 2 shows therein the rate of increase in direct current resistance at 25°C after the charge-discharge cycle for each of the energy storage devices according to Example 1, Example 2, and Comparative Examples 1 to 8.

As shown in Table 2, an increase in the direct current resistance of the energy storage device after the charge-discharge cycle has been found to be suppressed in Example 1 and Example 2 in which the negative active material contains the solid graphite, the BET specific surface area of the negative active material layer is 2.1 $m^2$/g or less, and the pressure applied to the electrode assembly is 0.1 MPa or more. In particular, in Example 2 in which the content of the solid graphite was 50% by mass or more, and the difference between D90 and D10 in the particle size distribution of the negative active material layer was 40 pm or less, the effect of suppressing an increase in direct current resistance after the charge-discharge cycle was excellent.

In contrast, the effect of suppressing an increase in direct current resistance after the charge-discharge cycles has been found to be low in Comparative Examples 1 to 8 in which the BET specific surface area of the negative active material layer is 2.1 m²/g or less and the pressure applied to the electrode assembly is not 0.1 MPa or more. In particular, in Comparative Example 1 in which the BET specific surface area of the negative active material layer was more than 2.1 m²/g, the pressure applied to the electrode assembly was less than 0.1 MPa, the content of the solid graphite was less than 50% by mass, and the difference between D90 and D10 in the particle size distribution of the negative active material layer was more than 40 pm, the rate of increase in direct current resistance after the charge-discharge cycle was high.

[Example 3]

(Fabrication of negative electrode)

The solid graphite and scaly graphite listed in Table 3 as negative active materials, a styrene butadiene rubber (SBR) as a binder, a carboxymethyl cellulose (CMC) as a thickener, and water as a dispersion medium were mixed to prepare a negative composite paste (negative active material layer forming material). Artificial graphite with the porosity listed in Table 3 and an aspect ratio of less than 5 was used as the solid graphite. The aspect ratio of the scaly graphite was 5 or more. The porosities of the artificial graphite and scaly graphite have values obtained by separately preparing negative electrodes each containing only the artificial graphite or only the scaly graphite as a negative active material and measuring the porosities of the negative electrodes by the method described above. The ratio by mass of the negative active material, binder, and thickener were 97 : 2 : 1.

The negative composite paste was prepared through a mixing step with the use of a multi-blender mill, with the viscosity adjusted by adjusting the amount of watery. The negative composite paste was applied to both surfaces of a copper foil as a negative substrate, and dried. Thereafter, roll pressing was performed to obtain a negative electrode. D10 and D90 in the particle size distribution of the negative active material, measured by the method above were respectively 6.7 pm and 31.6 pm, and the BET specific surface area of the negative active material layer, measured by the method mentioned above was 2.0 m²/g.

(Fabrication of positive electrode)

A positive composite paste was prepared with the use of $LiNi_{0.6}Co_{0.2}Mn_{0.2}O_2$ as a positive active material, acetylene black (AB) as a conductive agent, a polyvinylidene fluoride (PVDF) as a binder, and an N-methylpyrrolidone (NMP) as a dispersion medium. It is to be noted that the ratios by mass of the positive active material, conductive agent, and binder were 90 : 5 : 5 (in terms of solid content). The positive composite paste was applied to both surfaces of an aluminum foil as a positive substrate, and dried. Thereafter, roll pressing was performed to obtain a positive electrode.

(Nonaqueous electrolyte solution)

A nonaqueous electrolyte solution was obtained by dissolving $LiPF_6$ at a concentration of 1.2 mol/dm³ in a solvent obtained by mixing an ethylene carbonate (EC), a dimethyl carbonate (DMC), and an ethyl methyl carbonate (EMC) at ratios by volume of 30 : 35 : 35.

(Separator)

A polyethylene porous resin film made with a thickness of 25 pm was used as a separator.

(Assembly of energy storage device)

The positive electrode, the negative electrode, and the separator were stacked to obtain an electrode assembly. The electrode assembly was sealed in a case formed from a metal-resin composite film, a nonaqueous electrolyte solution was injected therein, and the case is then sealed. A restraining member for restraining in a fixed size in the stacking direction from both surfaces of the case was attached to obtain an energy storage device according to Example 3 with a load applied thereto such that the pressure applied to the electrode assembly was 0.1 MPa.

[Comparative Examples 9 to 11]

Respective energy storage device according to Comparative Examples 9 to 11 were obtained similarly to Example 3, except for using the materials listed in Table 3 as negative active materials, and changing the content ratio of the negative active material and the pressure applied to the electrode assembly as shown in Table 4. Table 4 shows therein D10 and D90 in the particle size distribution of the negative active material layer and the BET specific surface area for each of the energy storage device. It is to be noted that in Comparative Example 9 and Comparative Example 10, natural graphite with the porosity listed in Table 3 as hollow graphite and an aspect ratio of less than 5 was used as the negative active material in addition to solid graphite and the scaly graphite.

[Table 3]

| | Negative active material | | | | | | | | | | | | | | |
| --- | --- | --- | --- | --- | --- | --- | --- | --- | --- | --- | --- | --- | --- | --- | --- |
| | Natural graphite physical properties | | | | | Artificial graphite physical properties | | | | | Scaly graphite physical properties | | | | |
| | D10 [$\mu m$] | D50 [$\mu m$] | D90 [$\mu m$] | Porosity [%] | BET specific surface area [m²/g] | D10 [$\mu m$] | D50 [$\mu m$] | D90 [$\mu m$] | Porosity [%] | BET specific surface area [m²/g] | D10 [$\mu m$] | D50 [$\mu m$] | D90 [$\mu m$] | Porosity [%] | BET specific surface area [m²/g] |
| Comparative Example 9 | 13 | 17 | 23 | 10.4 | 3.9 | 7 | 17 | 30 | 1.0 | 1.4 | 4.0 | 10.3 | 23.2 | 0.0 | 7.7 |
| Comparative Example 10 | 13 | 17 | 23 | 10.4 | 3.9 | 7 | 17 | 30 | 1.0 | 1.4 | | | | | |
| Comparative Example 11 | - | - | - | - | - | 7 | 17 | 30 | 1.0 | 1.4 | | | | | |
| Example 3 | - | - | - | - | - | 7 | 17 | 30 | 1.0 | 1.4 | | | | | |

[Table 4]

Table 4

|  | Positive electrode | Negative active material | | | Negative active material layer | | | | Pressure applied to electrode assembly (MPa) | Evaluation |
|---|---|---|---|---|---|---|---|---|---|---|
|  | Positive active material | Natural graphite content [% by mass] | Artificial graphite content [% by mass] | Scaly graphite content [% by mass] | D10 [$\mu m$] | D90 | D90-D10 | BET specific surface [$\mu m$] [$\mu m$] area [m$^2$/g] |  | (45°C, 1000 cycles) Rate of increase in DCR at 25°C after charge-discharge cycle [%] |
| Comparative Example 9 | NCM622 | 40 | 40 | 20 | 9.9 | 72.9 | 63.0 | 2.3 | 0 | 14 |
| Comparative Example 10 | NCM622 | 40 | 40 | 20 | 9.9 | 72.9 | 63.0 | 2.3 | 0.1 | 5 |
| Comparative Example 11 | NCM622 | 0 | 80 | 20 | 6.7 | 31.6 | 24.9 | 1.7 | 0 | 18 |
| Example 3 | NCM622 | 0 | 80 | 20 | 6.7 | 31.6 | 24.9 | 1.7 | 0.1 | 3 |

[Evaluation]

The rate of increase in direct current resistance after the charge-discharge cycle for each of the energy storage devices according to Example 3 and Comparative Examples 9 to 11 was determined in accordance with the same procedure as in the (1-1) to (1-4) mentioned above, except that the conditions for the charge-discharge cycle test in the (1-3) mentioned above were changed as follows.

The conditions for the charge-discharge cycle test are as follows. At 45°C, the energy storage devices were subjected to constant current charge at a charge current of 1.0C and an end-of-charge voltage of 4.20 V, and then to constant voltage charge at 4.20 V With regard to the charge termination conditions, the charge was performed until the total charge time reached 3 hours. Thereafter, a pause period of 10 minutes was provided. The energy storage devices were subjected to constant current discharge at a discharge current of 1.0C for the electric quantity corresponding to 85% of the discharge capacity in the initial charge-discharge, and then, a pause period of 10 minutes was provided. The steps of charge and discharge were regarded as one cycle, and 700 cycles were performed.

Table 4 shows therein the rate of increase in direct current resistance at 25°C after the charge-discharge cycle for each of the energy storage devices according to Example 3 and Comparative Examples 9 to 11.

As shown in Table 4, an increase in the direct current resistance of the energy storage device after the charge-discharge cycle has been found to be suppressed also in Example 3 in which the negative active material contains the solid graphite, the BET specific surface area of the negative active material layer is 2.1 m$^2$/g or less, and the pressure applied to the electrode assembly is 0.1 MPa or more.

In contrast, the effect of suppressing an increase in direct current resistance after the charge-discharge cycles has been found to be low in Comparative Examples 9 to 11 in which the BET specific surface area of the negative active material layer is 2.1 m$^2$/g or less and the pressure applied to the electrode assembly is not 0.1 MPa or more. Surprisingly, a comparison between Comparative Example 9 and Comparative Example 11 in which no pressure is applied to the electrode assembly shows that the direct current resistance after the charge-discharge cycle is increased more in Comparative Example 11 in which the BET specific surface area of the negative active material layer is 2.1 m$^2$/g or less, whereas a comparison between Comparative Example 10 in which the pressure applied to the electrode assembly is 0.1 MPa or more and Example 3 shows that the increase in the direct current resistance of the energy storage device after the charge-discharge cycle is remarkably suppressed in Example 3 in which the BET specific surface area of the negative active material layer is 2.1 m$^2$/g or less.

The foregoing results have demonstrated that the energy storage device is capable of suppressing an increase in direct current resistance after a charge-discharge cycle.

INDUSTRIAL APPLICABILITY

The present invention can be applied to energy storage devices and the like for use as power sources for electronic devices such as personal computers and communication terminals, automobiles, and the like.

DESCRIPTION OF REFERENCE SIGNS

1: energy storage device
2: electrode assembly
3: case
4: positive electrode terminal
41: positive electrode lead
5: negative electrode terminal
51: negative electrode lead
20: energy storage unit
21: restraining member
30: energy storage apparatus

**Claims**

1.  An energy storage device comprising an electrode assembly including a negative electrode and a positive electrode,

    wherein the negative electrode includes a negative active material layer including a negative active material,

the negative active material contains solid graphite, and
the negative active material layer has a BET specific surface area of 2.1 m$^2$/g or less, and
a pressure applied to the electrode assembly is 0.1 MPa or more.

2. The energy storage device according to claim 1, wherein the negative active material further includes scaly graphite.

3. The energy storage device according to claim 1 or 2, wherein a content of the solid graphite in the negative active material is 50% by mass or more.

4. The energy storage device according to claim 1, 2 or 3, wherein a difference between D90 and D10 in a particle size distribution of the negative active material layer is 40 pm or less.

5. The energy storage device according to any one of claims 1 to 4, wherein the solid graphite is artificial graphite.

6. The energy storage device according to any one of claims 1 to 5, wherein the solid graphite is particulate, has an aspect ratio (b/a) of less than 5, with the aspect ratio (b/a) being a major axis b of a particle to a minor axis a of the particle, and has a porosity of 2% or less.

Fig. 1

Fig. 2

# EP 4 325 596 A1

<table>
<tr><td colspan="2"><strong>INTERNATIONAL SEARCH REPORT</strong></td><td>International application No.<br><strong>PCT/JP2022/015251</strong></td></tr>
</table>

**A. CLASSIFICATION OF SUBJECT MATTER**

*H01M 4/133*(2010.01)i; *H01M 4/587*(2010.01)i; *H01G 11/26*(2013.01)i; *H01M 10/0525*(2010.01)i; *H01M 10/058*(2010.01)i
FI: H01M10/058; H01M4/587; H01M4/133; H01M10/0525; H01G11/26

According to International Patent Classification (IPC) or to both national classification and IPC

**B. FIELDS SEARCHED**

Minimum documentation searched (classification system followed by classification symbols)

H01M4/133; H01M4/587; H01G11/26; H01M10/0525; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-91793 A (ASAHI KASEI CORP) 13 June 2019 (2019-06-13) | 1-6 |
| A | JP 2018-147878 A (TDK CORP) 20 September 2018 (2018-09-20) | 1-6 |
| E, A | JP 2022-52579 A (GS YUASA CORP) 04 April 2022 (2022-04-04) | 1-6 |

☐ Further documents are listed in the continuation of Box C.　　☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/015251**

| Patent document cited in search report | Publication date (day/month/year) | Patent family member(s) | Publication date (day/month/year) |
|---|---|---|---|
| JP 2019-91793 A | 13 June 2019 | (Family: none) | |
| JP 2018-147878 A | 20 September 2018 | US 2018/0254486 A1<br>CN 108539137 A | |
| JP 2022-52579 A | 04 April 2022 | (Family: none) | |

Form PCT/ISA/210 (patent family annex) (January 2015)

**EP 4 325 596 A1**

**Patent documents cited in the description**

- JP 2005222933 A